# EUROPÄISCHE PATENTANMELDUNG

(11) **EP 0 694 375 A2**
(43) Veröffentlichungstag der Anmeldung: **31.01.1996**
(21) Anmeldenummer: 95111836.3
(22) Anmeldetag: 28.07.1995
(51) Int. Cl.: B28C 1/18, B29B 7/64, B02C 4/40

(54) **Walzwerk für Rohstoffe für die keramische Industrie**

(30) Priorität: 29.07.1994 DE 9412222 U
(71) Anmelder: HÄNDLE GmbH & CO. KG, D-75417 Mühlacker (DE)
(72) Erfinder: Gutjahr, Erwin, D - 75236 Kämpfelbach 1 (DE)
(74) Vertreter: Twelmeier, Ulrich, Dipl. Phys.

(57) **Zusammenfassung**

Walzwerk für Rohstoffe für die keramische Industrie mit zwei einen Walzspalt (6) begrenzenden Walzen (4, 5), welche mit waagerechter Drehachse in einem Ständer (1) gelagert sind, und mit zwei Schabern (7, 8), von denen je einer einer der beiden Walzen (4, 5) zugeordnet ist, ihrem Mantel in seiner Wirkstellung anliegt und um eine waagerechte Achse (13) in eine Wartungsstellung schwenkbar ist. In Kombination mit der Schwenkbarkeit des Schabers (7, 8) ist eine Geradführung (12) vorgesehen.

Zur Veröffentlichung mit der Zusammenfassung wird die Abbildung Nr. 1 vorgeschlagen.

## Beschreibung

Die Erfindung geht aus von einem Walzwerk mit den im Oberbegriff des Anspruchs 1 angegebenen Merkmalen. Ein solches Walzwerk ist aus dem DE-GM 93 16 427 bekannt. Es handelt sich um ein Walzwerk für die Aufbereitung von Tonen oder ähnlichen Rohstoffen mit waagerechten Walzen, die einen Walzspalt begrenzen. Jeder der Walzen ist an der Unterseite, in der Nähe des Walzspaltes, ein Schaber zugeordnet, welcher um eine ortsfeste Achse um ungefähr 180° verschwenkbar ist in eine Wartungsposition, in welcher der Schaber ausgewechselt werden kann. Nachteilig dabei ist, dass der gesamte Schwenkbereich des Schabers von Einbauten frei sein muss, d.h. ein Bereich, der sich über die volle Breite der Walzen erstreckt. Je länger der Schwenkarm ist, desto größer ist der Raum, der im Gestell des Walzwerks von Einbauten völlig frei gehalten werden muss. Je kürzer der Schwenkarm ist, desto geringer ist der freizuhaltende Raum, aber desto schwerer zugänglich ist dann die Wartungsposition des Schabers im Walzwerkgestell. Nachteilig beim bekannten Walzwerk ist ferner, dass der Schwenkantrieb aus drei gekoppelten Hydraulikzylindern besteht, von denen einer im Fallweg des Rohstoffes liegt und permanent verschmutzt.

Aus der Firmenschrift "Händle Hochleistungsfeinwalzwerke WFZH" α -ALPHA"" ist ein Feinwalzwerk mit einem Schaber bekannt, welcher ebenfalls schwenkbar gelagert ist und durch einen Druckmittelzylinder betätigt werden kann. Der Schwenkhebel ist relativ kurz, so dass der für die Schwenkbewegung benötigte Bereich nicht so groß ist. Dafür ist der Schwenkbereich wesentlich größer als 180°, um eine Wartungsposition einnehmen zu können, die relativ hoch liegt und von oben her durch einen Spalt zwischen der Walze und ihrem Gestell zugänglich ist. Leider ist an dieser Stelle jedoch eine Laufschiene für einen Drehapparat zum Abdrehen des Walzenmantels vorgesehen, der erst abgebaut werden muss, um den Schaber in seiner Wartungsposition zugänglich zu machen. Ausserdem ist nachteilig, dass der Druckmittelzylinder vom Schaber entkoppelt werden muss, wenn dieser in seine Wartungsposition verschwenkt werden soll, und dass der Druckmittelzylinder in der Nachbarschaft einer Riemenscheibe liegt, die aus Sicherheitsgründen eine Schutzabdeckung braucht, so dass diese erst abgebaut werden muss, bevor man den Schaber in seine Wartungsposition bringen kann.

Der vorliegenden Erfindung liegt die Aufgabe zugrunde, ein Walzwerk der eingangs genannten Art dahingehend zu verbessern, dass man den Schaber mit mässigem apparativem Aufwand und mit möglichst wenig Platzbedarf aus seiner Wirkstellung in eine bequem zugängliche Wartungsstellung bringen kann.

Diese Aufgabe wird gelöst durch ein Walzwerk mit den im Anspruch 1 angegebenen Merkmalen. Vorteilhafte Weiterbildungen der Erfindung sind Gegenstand der abhängigen Ansprüche.

Die Erfindung kommt zu wesentlich günstigeren Verhältnissen als sie beim Stand der Technik vorliegen, weil für die Bewegung des Schabers aus seiner Wirkstellung in seine Wartungstellung nicht nur eine Schwenkbewegung vollführt wird, sondern die Schwenkbewegung mit einer linearen Bewegung kombiniert wird. Das bedeutet im Ergebnis, dass man trotz eines relativ kurzen Schwenkhebels und eines relativ kleinen Schwenkwinkels den Schaber aus seiner Wirkstellung in eine bequem zugängliche Wartungsposition bewegen kann. Das könnte im Prinzip so aussehen, dass man den Schaber zunächst von der Walze weg verschwenkt durch den Bereich hindurch, durch den beim Betrieb des Walzwerks der Rohstoff fällt bis in eine Position, welche auf der dem Walzspalt abgewandten Seite der Schwenkachse liegt, wobei man dann aus dieser Position heraus den Schaber von seiner Schwenkachse weg in seine Wartungsposition vorschiebt. Günstiger ist es jedoch, den Schaber zunächst vom Walzenmantel wegzuziehen und ihn dann auf kurzem Weg, am Walzenmantel vorbei, in seine Wartungsposition zu verschwenken, denn bei dieser Vorgehensweise kommt man mit dem geringsten Schwenkwinkel aus und durchfährt nicht den Bereich unter dem Walzspalt, in welchem der Rohstoff herabfällt. Der Raumbereich, der in diesem Fall für die Bewegung des Schabers freigehalten werden muss, ist minimal.

Besonders bequem zugänglich ist der Schaber dann, wenn in der Nachbarschaft der Wartungsstellung ein Fenster vorgesehen ist. Ein solches Fenster kann unterhalb der Schiene, auf der normalerweise ein Drehapparat verschiebbar ist, ohne Schwierigkeit vorgesehen werden, da die von den Walzenzapfen ausgeübten Kräfte ohnehin von den Seitenteilen des Ständers des Walzwerks aufgenommen werden müssen und an den dazu quer verlaufenden vorderen und hinteren Enden des Ständers grundsätzlich nur Verstrebungen benötigt werden, die die Seitenteile steif miteinander verbinden; diese Verstrebungen können aber ohne weiteres Durchbrüche haben, so dass ein Durchbruch zur Bildung eines Fensters, welches den Zugriff zum Schaber ermöglicht, leicht realisiert werden kann, und an dieses Fenster kann der Schaber durch die kombinierte Schwenk-Schiebebewegung dicht herangeführt werden. Der Schaber kann deshalb auf normalem Arbeitsniveau der Maschine bequem ausgewechselt werden, ohne dass sich eine Bedienungsperson dazu verrenken oder in einen beengten Raum hineinzwängen müsste.

Die Geradführung des Schabers bzw. seines Trägers befindet sich zweckmässigerweise zu beiden Seiten des Schabers bzw. seines Trägers an den Seitenteilen des Ständers und ist so ausgebildet, dass sie den Schaber in seiner zurückgezogenen Endstellung auf der dem Walzspalt abgewandten Seite zum Schwenken freigibt. Der Vorteil dieser Ausbildung liegt darin, dass die Geradführung ortsfest an den Seitenteilen vorgesehen werden kann und deshalb viel leichter in der Lage ist, die vom Walzwerk auf die Schaber ausgeübten, nicht unerheblichen Kräfte aufzufangen, als wenn die Geradführung mit verschwenkt würde in die Wartungstellung. Besser ist es, die Geradführung stehen zu lassen und nur den Schaber samt seiner Halterung aus seiner zurückgezogenen Stellung heraus in die Wartungsstellung zu verschwenken. Zu diesem Zweck könnte man am Schaber bzw. seinem Träger zwei Schwenkzapfen vorsehen, welche in der Geradführung gleiten und in der zurückgezogenen Endstellung des Schabers dessen Verschwenken ermöglichen. Vorteilhafter ist es jedoch, stattdessen ortsfeste Schwenkzapfen an den Seitenteilen des Ständers vorzusehen und diesen den Träger des Schabers durch Verschieben längs der Geradführung zuzuführen, denn bei einer derartigen Konstruktion ist die Gefahr, dass sich das Schwenklager mit herabfallendem Rohstoff zusetzt, geringer. Damit der Träger des Schabers in seiner Endstellung auf den Schwenkzapfen sitzt und um diese herum verschwenkt werden kann, besitzt er zweckmässigerweise Eingriffsteile, welche mit den Schwenkzapfen zusammenarbeiten. Bei den Eingriffsteilen kann es sich z.B. um eine Gabel handeln, welche den Schwenkzapfen zwischen sich aufnimmt. Einfacher und aus Gründen der Verschmutzungsfreiheit günstiger ist es, stattdessen am unteren Ende des Trägers in der Nachbarschaft der Seitenteile des Ständers zwei keilförmige oder prismatische Körper vorzusehen, die mit ihrer Spitze in einem Zwischenraum zwischen einer Leiste der Geradführung und dem Zapfen eingreifen und auf diese Weise sicherstellen, dass ein am Träger des Schabers angreifender Schwenkantrieb, insbesondere ein Druckmittelzylinder, den Schaber um seine Schwenkzapfen herumdreht, wobei das Eingriffsteil auf dem Schwenkzapfen gleitet; auf dem Schwenkzapfen abgelagerter Rohstoff wird dabei selbsttätig weggerieben.

Aus dem Walzspalt herabfallender Rohstoff kann u.U. auch in die Geradführungen eindringen. Deshalb sind die Geradführungen vorzugsweise mit Schlitzen versehen, durch die der Träger des Schabers mit seinem Eingriffsteil, welches in der Geradführung geführt ist, den eingedrungenen Rohstoff wieder herausschiebt, was besonders gut geht, wenn die Schlitze abwechselnd in spitzem und in stumpfem Winkel zur Bewegungsrichtung des Schabers angeordnet sind, weil dann sowohl beim Vorschieben als auch beim Zurückziehen des Schabers in die Geradführung eingedrungener Rohstoff ausgetragen werden kann.

Um das Einfädeln des am Träger des Schabers vorgesehenen Eingriffsteils in die Geradführung zu erleichtern ist es vorzugsweise keilförmig ausgebildet.

Sieht man Geradführungen vor, die schwenkbar am Ständer angebracht und so massiv sind, daß sie die beim Schaben auftretenden Kräfte aufnehmen und in den Ständer einleiten können, dann kann man mit Vorteil den Schaber zusätzlich verschiebbar in den Geradführungen unterbringen. Der Vorteil besteht darin, daß die Schaber näher an das Wartungsfenster herangebracht werden können.

Zwei Ausführungsbeispiele der Erfindung sind schematisch in den beigefügten Zeichnungen dargestellt.

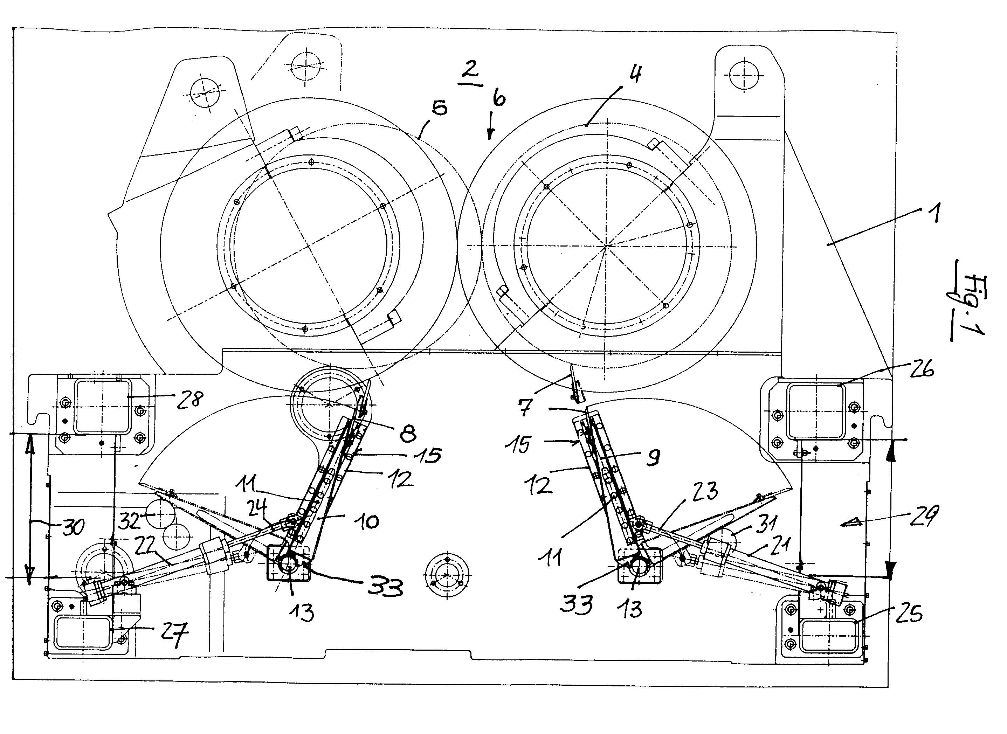

- Figur 1: zeigt ein Walzwerk in einer Ansicht rechtwinklig zu den Seitenteilen des Ständers, wobei ein Seitenteil entfernt wurde, um die Anordnung der Schaber sichtbar zu machen,

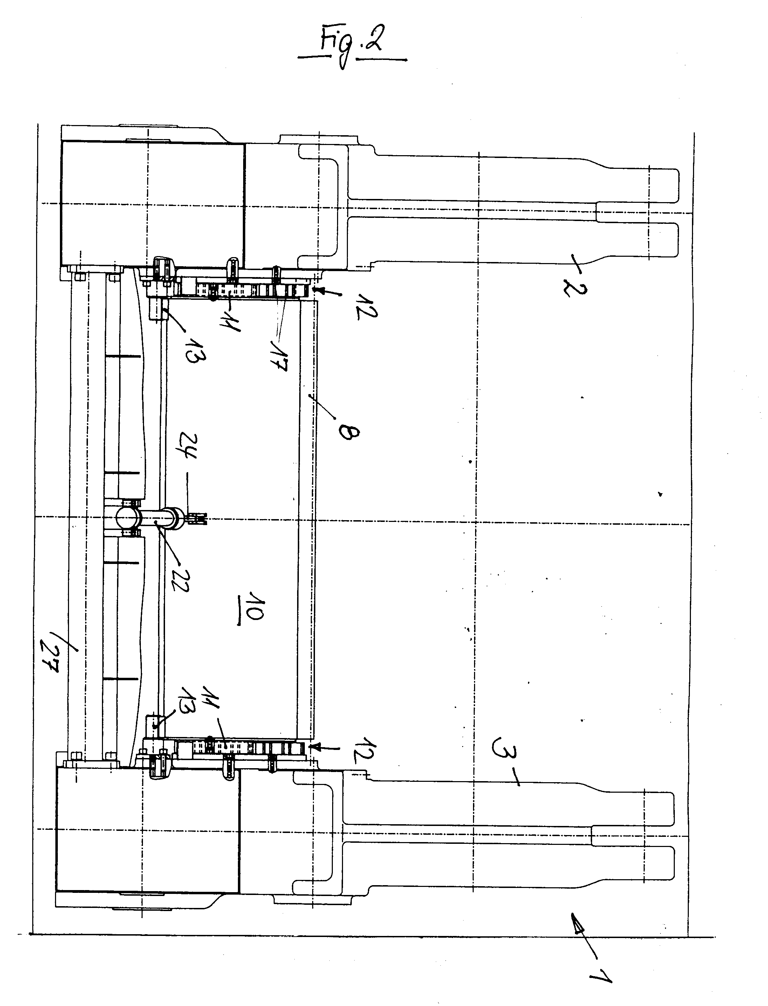

- Figur 2: zeigt eine Seitenansicht mit im Vergleich zur Figur 1 um 90° geänderter Blickrichtung und mit weggebogener Verkleidung des Gestells,
- Figur 3: zeigt als Detail die Seitenansicht einer Geradführung,
- Figur 4: zeigt den Schnitt IV-IV durch die Geradführung in Figur 3,
- Figur 5: zeigt als Detail die Ansicht eines in der Geradführung gemäß Figur 3 geführten Eingriffsteiles, welches aussenseitlich am Träger eines Schabers vorgesehen ist, und
- Figur 6: zeigt ein anderes Beispiel eines Walzwerks in einer Darstellung entsprechend der Fig. 1.

Gleiche oder einander entsprechende Teile sind in den beiden Ausführungsbeispielen mit übereinstimmenden Bezugszahlen bezeichnet.

Das in den Zeichnungen dargestellte Walzwerk hat einen Ständer 1, in dessen Seitenteilen 2 und 3 zwei Walzen 4 und 5 gelagert sind, die einen Walzspalt 6 begrenzen. Unter den Walzen sind zwei Schaber 7 und 8 angeordnet, welche in ihrer Wirkstellung dem Mantel der Walzen 4 bzw. 5 anliegen. Die Wirkstellung ist für den Schaber 7 an der Walze 4 gesondert dargestellt.

Die Schaber 7 und 8 sind an einem Träger 9 bzw. 10 befestigt, welcher an seinen beiden Seitenrändern Eingriffsteile 11 hat, die als Keile ausgebildet sind und in Geradführungen 12 geführt sind, welche an den Seitenteilen 2 und 3 des Ständers 1 angebracht sind. Die Geradführungen verlaufen schräg von oben nach unten, wobei das untere Ende jeweils einen größeren Abstand von der Mitte des Ständers hat als das obere Ende.

Am unteren Ende einer jeden Geradführung 12 ist an den Seitenteilen 2 und 3 ein ortsfester Schwenkzapfen 13 angebracht.

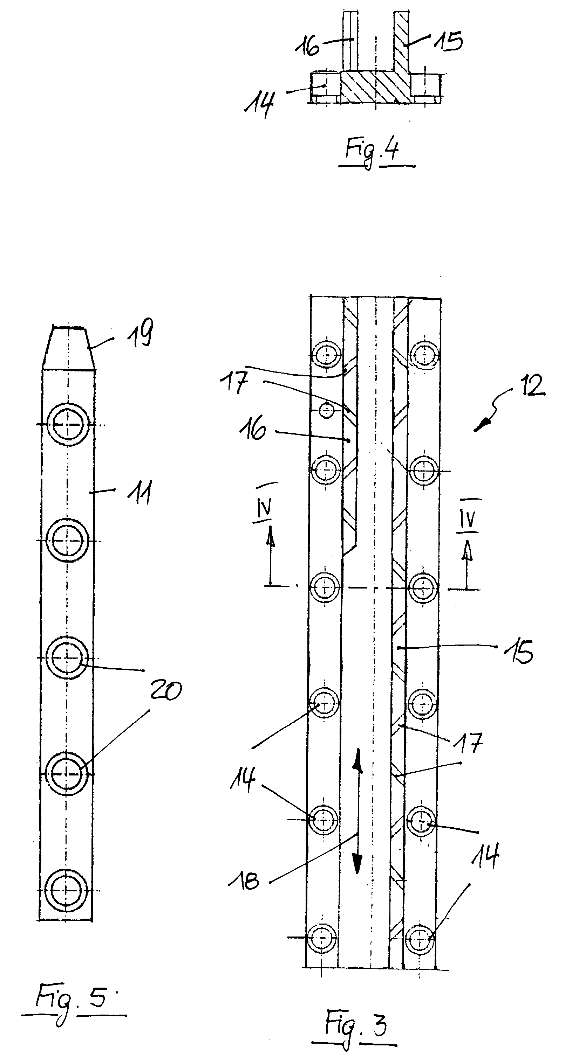

Die Geradführungen sind im einzelnen in den Figuren 3 und 4 dargestellt. Sie bestehen aus einer unsymmetrischen U-Schiene, welche über eine Anzahl von Befestigungsbohrungen 14 mit den Seitenteilen 2 bzw. 3 verschraubt sind. Die Unsymmetrie besteht darin, dass von den beiden Schenkeln 15 und 16 des U-Profils ein Schwenkel kürzer ist als der andere. Der jeweils kürzere Schenkel 16 erstreckt sich vom oberen Ende der Geradführung 12 ausgehend nicht über die volle Lände der Geradführung, im Gegensatz zu dem gegenüberliegenden Schenkel 15, welcher sich über die volle Länge der Geradführung erstreckt. Die durchgehenden Schenkel 15 sind einander zugewandt, die kurzen Schenkel 16 voneinander abgewandt. Die Länge des kurzen Schenkels 16 ist auf die Länge des Eingriffsteils 11 so abgestimmt, dass das Eingriffsteil in seiner zurückgeschobenen Endstellung, in welcher es am Schwenkzapfen 13 anschlägt, nur noch an dem längeren Schenkel 15 anliegt, vom kürzeren Schwenkel 16 jedoch nicht mehr überdeckt wird.

Beide Schenkel 15 und 16 weisen Schlitze 17 auf, welche abwechselnd im stumpfen und im spitzen Winkel zur Verschieberichtung 18 der Eingriffsteile 11 verlaufen. Die Eingriffsteile haben eine keilförmige Spitze 19, welche das Einfädeln in den Zwischenraum zwischen den Schenkeln 15 und 16 erleichtert. Die Eingriffsteile 11 haben waagerechte Bohrungen 20, mit deren Hilfe sie am Träger 10 des Schabers 7 bzw. 8 befestigbar sind.

An den beiden gegenüberliegenden Enden des Ständers 1 sind zwei Hydraulikzylinder 21 und 22 angelenkt, deren Kolbenstange 23 bzw. 24 am Träger 10 angelenkt ist. Oberhalb der Stelle, an welcher die Hydraulikzylinder 21 und 22 am Gestell 1 angelenkt sind, befindet sich zwischen zwei Traversen 25 und 26 bzw. 27 und 28 des Ständers ein Fenster 29 bzw. 30. Unmittelbar hinter diesen Fenstern 29 und 30 befindet sich die Wartungsposition der beiden Schaber 7 bzw. 8. Die Wartungspositionen sind durch Gummipuffer 31 und 32 markiert.

Die Schaber 7 und 8 werden ausschließlich durch Betätigung der Hydraulikzylinder 21 und 22 aus ihrer Wirkstellung in ihre Wartungsstellung und wieder zurückbewegt. In ihrer Wirkstellung verharren sie bei ausgefahrener Kolbenstange 23 bzw. 24. Zum Überführen in die Wartungsstellung werden die Kolbenstangen 23 und 24 eingezogen. Dadurch bewegen sich die Eingriffsteile 11 in den Geradführungen 12 abwärts, bis sie an den Schwenkzapfen 13 anschlagen. In dieser Endstellung werden die Eingriffsteile frei, weil sie von den kurzen Schenkeln 16 der Geradführungen nicht mehr überdeckt sind. Bei weiterem Einziehen der Kolbenstangen werden die Eingriffteile 11 um den jeweiligen Schwenkzapfen herum verschwenkt, wobei ein keilförmiger Fortsatz 33 des Trägers 10, welcher bezogen auf den Angriffspunkt des Hydraulikzylinders 21 bzw. 22 hinter dem jeweiligen Schwenkzapfen 13 liegt, dafür sorgt, dass die Halterung 10 nicht über den Schwenkzapfen 13 hinweggehoben wird, sondern um ihn herum verschwenkt wird, wobei der Keil 33 mit einer seiner Flächen auf der Mantelfläche des Schwenkzapfens 13 gleitet. Etwaiger Rohstoff , welcher sich abgelagert hat, wird dabei von den Schwenkzapfen 13 abgerieben. In die U-Schiene der Geradführung 12 eingedrungener Rohstoff wird mittels der Schiebebewegung des Eingriffsteils 11 durch die Schlitze 17 aus der U-Schiene herausgefördert.

Der Schwenkbereich des Schabers 7 und 8 beträgt nur ungefähr 90° und erstreckt sich ungefähr vom unteren Scheitel der betreffenden Walze 4 bzw. 5 bis zum benachbarten Fenster 29 bzw. 30. Der Raum unterhalb der Schwenkzapfen 13 wird für die Bewegung der Schaber ebenso wenig benötigt wie der Raum zwischen den Schabern 7 und 8 sowie ihren Trägern 10, so dass dort ohne Schwierigkeit ein Trichter oder dergleichen Fallschacht für den Rohstoff angeordnet werden kann, welcher den Walzspalt 6 verläßt, ohne dass dadurch die Bewegung der Schaber 7 und 8 behindert würde.

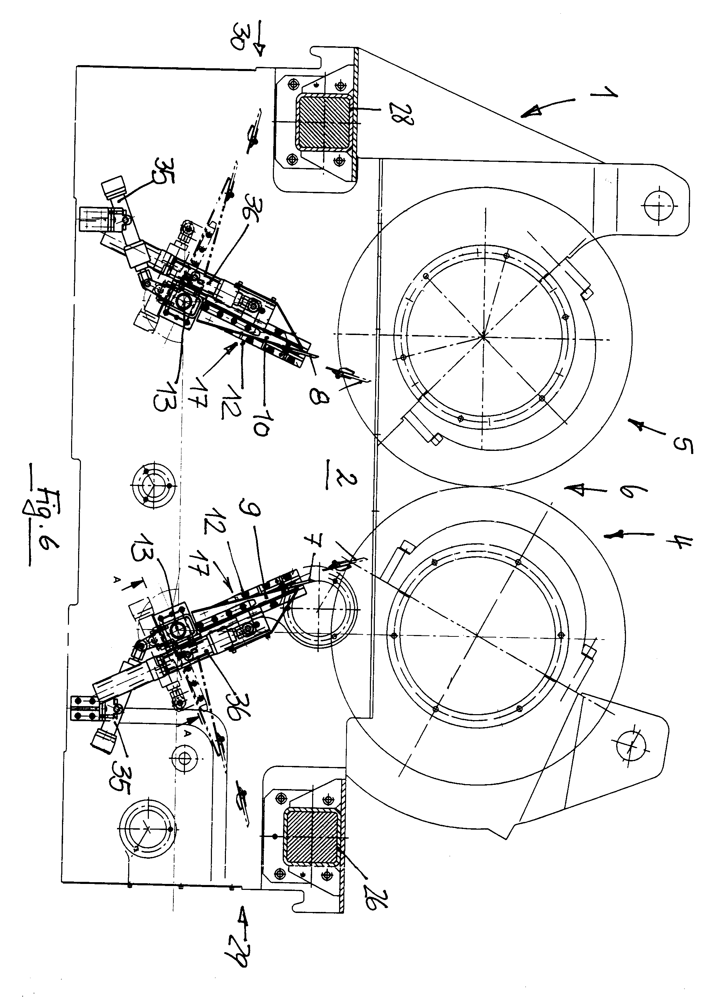

Das in Figur 6 dargestellte zweite Ausführungsbeispiel unterscheidet sich vom ersten Ausführungsbeispiel darin, daß die Geradführungen 12 nicht fest, sondern um einen Zapfen 13 schwenkbar an den Seitenteilen 2 des Ständers 1 angebracht sind. An den Seitenteilen 2,3 des Ständers angelenkte Druckmittelzylinder 35 verschwenken die Geradführungen mitsamt den darin befindlichen Schabern 7 bzw. 8 aus der Wirkposition, in welcher der Schaber gegen die Walze 4 bzw. 5 gerichtet ist, in seine gestrichelt eingezeichnete Wartungsposition, in welcher der Schaber hinter dem Wartungsfenster 29 bzw. 30 liegt. Zum Zurückziehen des Schabers 7 bzw. 8 von der Walze 4 bzw. 5 und zum Anlegen des Schabers an die Walze ist an der betreffenden Geradführung 12 ein weiterer Druckmittelzylinder 36 vorgesehen, welcher den Schaber 7 bzw. 8 in der Geradführung 12 verschiebt. Ein Vorteil dieser Ausführungsform liegt darin, daß durch den weiteren Druckmittelzylinder 36 der Schaber 7 bzw. 8 näher an das Fenster 29 bzw. 30 herangeschoben werden kann, so daß der Austausch des Schabers erleichtert wird.

## Patentansprüche

1. Walzwerk für Rohstoffe für die keramische Industrie mit zwei einen Walzspalt (6) begrenzenden Walzen (4, 5), welche mit waagerechter Drehachse in einem Ständer (1) gelagert sind,
und mit zwei Schabern (7, 8), von denen je einer einer der beiden Walzen (4, 5) zugeordnet ist, ihrem Mantel in seiner Wirkstellung anliegt und um eine waagerechte Achse (13) in eine Wartungsstellung schwenkbar ist,
**dadurch gekennzeichnet,** dass in Kombination mit der Schwenkbarkeit des Schabers (7, 8) eine Geradführung (12) vorgesehen ist.

2. Walzwerk nach Anspruch 1, **dadurch gekennzeichnet**, dass die Anordnung der Geradführung (12) so gewählt ist, dass der Schaber (7, 8) in einer die Schwenkachse (13) enthaltenden oder zur Schwenkachse (13) parallelen Ebene aus seiner Wirkstellung zurückziehbar und in seine Wirkstellung vorschiebbar gelagert ist.

3. Walzwerk nach Anspruch 1 oder 2, **dadurch gekennzeichnet,** dass im Ständer (1) in der Nachbarschaft der Wartungsstellung ein Fenster (29, 30) vorgesehen ist.

4. Walzwerk nach Anspruch 1, 2 oder 3, **dadurch** **gekennzeichnet**, dass die Geradführung (12) zu beiden Seiten des Schabers (7, 8) an Seitenteilen (2, 3) des Ständers (1) vorgesehen und so ausgebildet ist, dass sie den Schaber (7, 8) in seiner zurückgezogenen Endstellung auf der dem Walzspalt (6) abgewandten Seite zum Schwenken freigibt.

5. Walzwerk nach einem der vorstehenden Ansprüche, **dadurch gekennzeichnet,** dass der Schaber (7, 8) oder ein Träger (10) des Schabers (7, 8) Schwenkzapfen hat, die in der Geradführung geführt sind.

6. Walzwerk nach einem der Ansprüche 1 bis 4, **dadurch gekennzeichnet,** dass an den Seitenteilen des Ständers (1) ortsfeste Zapfen (13) als Schwenklager für die Schaber (7, 8) vorgesehen sind und dass die Schaber (7, 8) oder ihr Träger (10) ein Eingriffsteil (33) haben, welches mit dem jeweiligen Zapfen (13) zusammenarbeitet.

7. Walzwerk nach einem der vorstehenden Ansprüche, **dadurch gekennzeichnet,** dass die Geradführung (12) als Keilführung ausgebildet ist.

8. Walzwerk nach einem der vorstehenden Ansprüche, **dadurch gekennzeichnet,** dass die Geradführung (12) Schlitze (17) für den Durchtritt von herabfallendem Rohstoff hat.

9. Walzwerk nach Anspruch 8, **dadurch gekennzeichnet**, dass die Schlitze (17) abwechselnd in spitzem und in stumpfem Winkel zur Bewegungsrichtung (18) des Schabers (7, 8) ausgerichtet sind.

10. Walzwerk nach einem der vorstehenden Ansprüche, dadurch gekennzeichnet, daß die Geradführung (12) zwischen einer wirksamen Stellung, in welcher der Schaber (7, 8) gegen die Walze (4, 5) gerichtet ist, und einer Wartungsstellung, in welcher der Schaber (7, 8) gegen ein Wartungsfenster (29, 30) des Ständers (1) gerichtet ist, verschwenkbar im Ständer (1) gelagert ist und daß der Schaber (7, 8) in beiden Stellungen in der Geradführung (12) verschiebbar ist.
